# EUROPÄISCHE PATENTSCHRIFT

(11) **EP 2 311 591 B1**
(45) Veröffentlichungstag und Bekanntmachung des Hinweises auf die Patenterteilung: **16.05.2012**
(21) Anmeldenummer: 09013133.5
(22) Anmeldetag: 17.10.2009
(51) Int. Cl.: B23D 63/16

(54) **Schärfgerät zum manuellen Schärfen der Schneidzähne von Sägeketten für Kettensägen**
Sharpening device for manual sharpening of the cutting teeth of saw chains for chainsaws
Appareil d'aiguisement pour l'aiguisement manuel des dents de coupe de chaînes de scie pour scies à chaîne

(43) Veröffentlichungstag der Anmeldung: 20.04.2011
(73) Patentinhaber: August Rüggeberg GmbH & Co. KG, 51709 Marienheide (DE)
(72) Erfinder: Schlimbach, Klemens, Dr., 53819 Neunkirchen (DE); Kruse, Bernd, 51643 Gummersbach (DE)
(74) Vertreter: Rau, Manfred

(56) Entgegenhaltungen:
- DE-B1- 2 933 293
- DE-U1- 9 408 585

## Beschreibung

Die Erfindung betrifft ein Schärfgerät zum manuellen Schärfen der Schneidzähne von Sägeketten für Kettensägen.

Kettensägen müssen, damit ihre optimale Schneidleistung erhalten bleibt, in regelmäßigen Zeitabständen geschärft werden. Bei Kettensägen mit unsachgemäß geschärften Schneidzähnen der Sägeketten tritt ein unruhiger Lauf der Sägeketten auf, die Schneidleistung nimmt ab und in Grenzfällen kann sogar die Sägekette reißen, was wiederum zu schwerwiegenden Unfällen führen kann. Außerdem führen die vorgenannten Nachteile zu hohem Verschleiß und Ausfällen der Antriebsmaschine der Kettensäge.

Aus der DE 29 33 293 B1 (entspr. US-Patent 4,427,605) ist ein Schärfgerät der allgemeinen Gattung mit einem Rahmen bekannt, der im Wesentlichen durch zwei Endstücke oder Kopfteile gebildet ist, die durch zwei zueinander parallele Führungsstangen miteinander verbunden sind. An einem Endstück ist zusätzlich ein Handgriff befestigt. In den Endstücken bzw. Kopfteilen sind eine Rundfeile und eine Vierkantfeile auswechselbar gelagert. Die Rundfeile ist mit einem Feilenheft versehen, das gleichzeitig als Handgriff des Schärfgeräts dient. Jeder zweite Schneidzahn der Sägekette wird in einer Anordnung von Rundfeile und Vierkantfeile gefeilt. Zum Feilen des jeweils zweiten anderen Schneidzahns werden die Vierkantfeile und die Rundfeile aus ihrer Halterung in den Kopfteilen herausgenommen und in umgekehrter Richtung in den Rahmen eingesetzt. Hierbei wird auch das Feilenheft aus jeweils einem Kopfteil herausgenommen und beim Umsetzen der Rundfeile in das andere Kopfteil eingesetzt und dient dann wiederum als Handgriff des Schärfgerätes. Der jeweils erforderliche Umbau des Schärfgeräts ist aufwändig.

Durch zunehmendes Abfeilen der Zahnbrust mit der Spanfläche verändert die Schneide ihre Lage senkrecht zur Schneidrichtung, und zwar kommt sie immer näher an die eigentliche Sägekette heran, da die Freifläche jedes Schneidzahnes einen Freiwinkel gegenüber der Schneidrichtung aufweist, damit der durch die Freifläche begrenzte Zahnrücken nicht am zu schneidenden Holz schleift bzw. reibt. Dadurch, dass die Führungsstangen auf den Freiflächen zweier benachbarter Schneidzähne aufliegen, wird das Profil der Spanfläche und der Zahnbrust beim Schärfen der Schneide durch Feilen der Spanfläche und der Zahnbrust parallel zur Freifläche verschoben. Gleichzeitig wird der Tiefenbegrenzer mit abgefeilt, so dass die Schnitttiefe, d. h. der Abstand zwischen Schneide und Tiefenbegrenzer, senkrecht zur Schneidrichtung immer konstant bleibt.

Der Erfindung liegt die Aufgabe zugrunde, ein Schärfgerät der allgemeinen Gattung zu schaffen, das ein abwechselndes Schärfen der jeweils abwechselnden unterschiedlichen Zähne einer Sägekette ohne Umbau des Schärfgeräts ermöglicht.

Diese Aufgabe wird erfindungsgemäß bei einem Schärfgerät durch die Merkmale des Anspruches 1 gelöst. Durch die erfindungsgemäßen Maßnahmen wird erreicht, dass das Schärfgerät lediglich um seine Längsachse gedreht werden muss, wenn von einer Art eines Schneidzahns zum anderen Schneidzahn gewechselt werden soll. Die beiden Feilflächen zum Befeilen der beiden verschiedenen Arten von Tiefenbegrenzem haben unterschiedliche Feilrichtungen.

Von besonderem Vorteil ist die Ausgestaltung nach Anspruch 2, da auf sehr einfache Weise alle Feilen nach Verschleiß ausgewechselt werden können. Während des Einsatzes des Schärfgeräts ist dagegen ein Herausnehmen und Wiedereinsetzen der nicht verschlissenen Feilen nicht notwendig.

Weitere Vorteile, Merkmale und Einzelheiten der Erfindung ergeben sich aus der nachfolgenden Beschreibung eines Ausführungsbeispiels anhand der Zeichnung. Es zeigt
- Fig. 1: eine Seiten-Längs-Ansicht eines Teilstücks einer zu schär- fenden Sägekette,
- Fig. 2: eine Draufsicht auf die Sägekette nach Fig. 1 entsprechend dem Sichtpfeil II in Fig. 1,

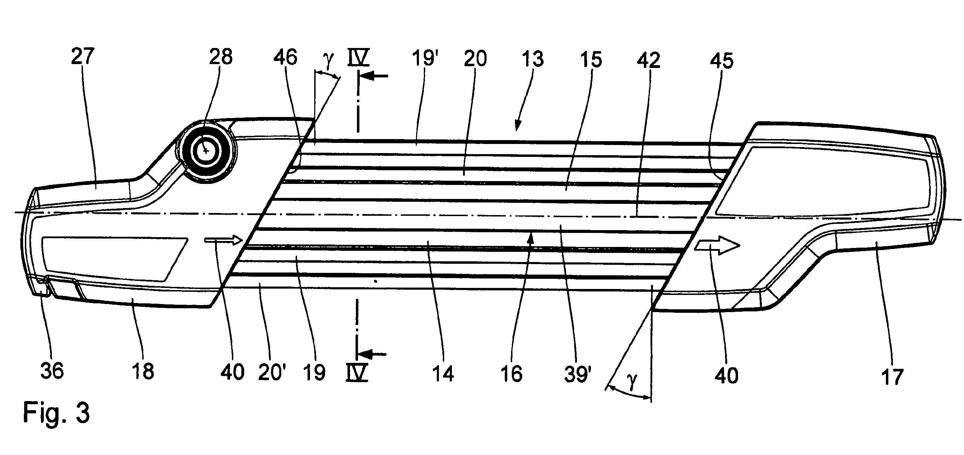

- Fig. 3: eine Seiten-Längs-Ansicht eines Schärfgeräts nach der Erfin- dung,
- Fig. 4: einen Querschnitt durch das Schärfgerät gemäß Fig. 3 ent- sprechend der Schnittlinie IV-IV in Fig. 3,

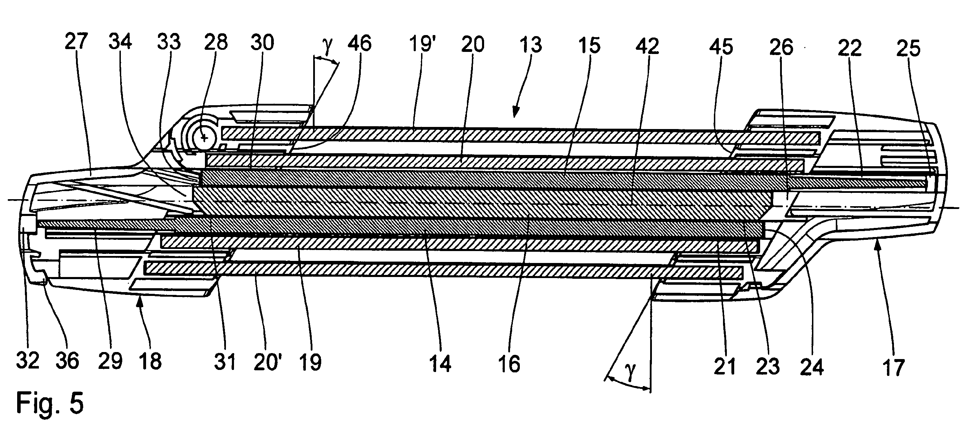

- Fig. 5: einen Längsschnitt durch das Schärfgerät entsprechend der Schnittlinie V-V in Fig. 4,
- Fig. 6: eine perspektivische Explosions-Darstellung des Schärfgeräts mit herausgenommenen Rundfeilen und herausgenommener Flachfeile,
- Fig. 7: ein Schärfgerät im Schärfeinsatz an einer Sägekette, und zwar in doppelter Darstellung entsprechend den beiden Schärf- einsätzen und

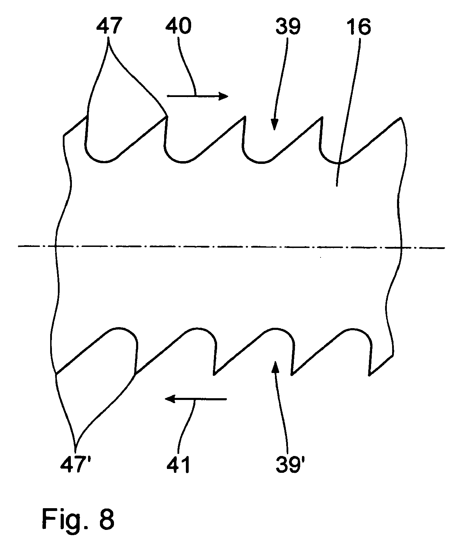

- Fig. 8: einen Teilausschnitt aus einer im erfindungsgemäßen Schärf- gerät einzusetzenden Flachfeile.

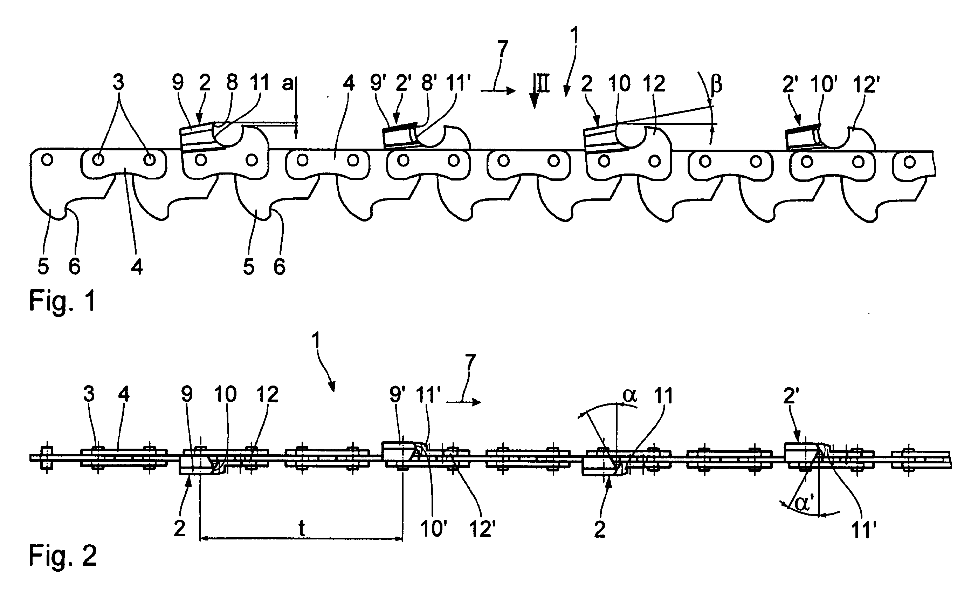

Zur Erleichterung des Verständnisses wird zuerst eine in den Fig. 1 und 2 dargestellte Sägekette 1 für Kettensägen beschrieben. Die Sägekette 1 weist immer abwechselnd zueinander und spiegelsymmetrisch zueinander ausgebildete, also abwechselnd links und rechts schneidende Schneidezähne 2, 2' auf, die mittels Nieten 3 mit normalen Kettengliedern 4 zu einer gelenkigen Sägekette 1 verbunden sind. Jedem Schneidzahn 2 bzw. 2' ist ein Paar von Kettengliedern 4 nach- bzw. vorgeordnet, dem dann erst wieder ein weiterer Schneidzahn 2' bzw. 2 folgt. Zwischen dem Paar von Kettengliedern 4 bzw. zwischen einem Schneidzahn 2 bzw. 2' und einem zugeordneten Kettenglied 4 sind jeweils mittig Verbindungsglieder 5 angeordnet, die jeweils mit einem Zahn 6 zum Eingriff in ein Antriebsrad einer Kettensäge versehen sind. Die Sägekette 1 und damit die Schneidzähne 2, 2' werden zum Schneiden von Holz in Schneidrichtung 7 bewegt. Die Schneidzähne 2, 2' weisen jeweils eine Spanfläche 8 bzw. 8' und eine Freifläche 9 bzw. 9' auf. Die durch die Durchdringungslinie von Spanfläche 8 bzw. 8' und Freifläche 9 bzw. 9' gebildete Schneide 10 bzw. 10' weist einen Schärfwinkel α von 30 bis 35° auf, der zu einer senkrecht zur Schneidrichtung 7 verlaufenden Linie gebildet ist. Ein solcher Schärfwinkel α bzw. α' ungleich null dient dazu, einen sogenannten ziehenden Schnitt zu erzeugen. Der Zahnbrust 11 bzw. 11'vorgelagert ist ein Tiefenbegrenzer 12 bzw. 12', der die Schnitttiefe a festlegt. Die Freifläche 9 bzw. 9' bildet zur Schneidrichtung 7 einen Freiwinkel β von einigen Grad, damit die Freifläche 9 bzw. 9' von dem zu schneidenden Holz hinter der Schnittstelle an der Schneide 10 bzw. 10' frei ist.

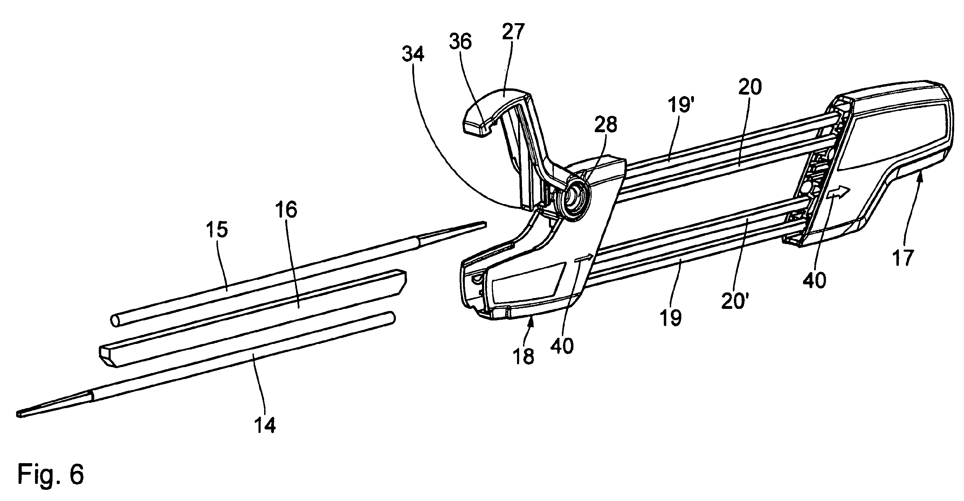

Das in der Zeichnung dargestellte Schärfgerät weist einen Rahmen 13 zur Halterung und Führung von zwei Rundfeilen 14, 15 und einer Flachfeile 16 auf. Der Rahmen 13 besteht aus zwei Kopfteilen 17, 18 und vier parallel zueinander angeordneten, diese beiden Kopfteile 17, 18 verbindenden Führungsstangen 19, 19' und 20, 20'. Im Kopfteil 17 sind drei Aufnahmen 21, 22, 23 für die Rundfeilen 14, 15 und die Flachfeile 16 ausgebildet, die jeweils einen als Anschlag oder Widerlager 24, 25, 26 dienenden Boden zur Abstützung der Rundfeilen 14, 15 und der Flachfeile 16 gegen Verschiebung in ihrer Längsrichtung aufweisen. Die Aufnahmen 21, 22, 23 sind im Querschnitt den Rundfeilen 14, 15 bzw. der Flachfeile 16 derart angepasst, dass die Feilen 14, 15 quer zu ihrer Längsrichtung weitgehend spielfrei gelagert werden. Über das Kopfteil 18 erfolgt das Einsetzen oder die Entnahme der Rundfeilen 14, 15 und der Flachfeile 16. Hierzu ist das Kopfteil 18 mit einer Beladeklappe 27 versehen, die um eine Schwenkachse 28 geöffnet bzw. geschlossen werden kann, wie insbesondere Fig. 6 entnehmbar ist. Das Kopfteil 18 weist ebenfalls im Querschnitt den Feilen 14, 15, 16 angepasste Aufnahmen 29, 30, 31 für die Rundfeilen 14, 15 und die Flachfeile 16 auf, in denen die Feilen 14, 15, 16 quer zu ihrer Längsrichtung weitgehend spielfrei gelagert werden. An der Beladeklappe 27 sind weiterhin drei als Widerlager 32, 33, 34 dienende Anschläge für die Feilen 14, 15, 16 ausgebildet, gegen die die Feilen 14, 15, 16 in ihrer Längsrichtung unverschiebbar anliegen. Diese Widerlager 32, 33, 34 sind durch ein in der Beladeklappe 27 angeordnetes Federelement in Längsrichtung der Feilen 14, 15, 16 belastet, so dass insgesamt eine spielfreie Abstützung der Feilen 14, 15, 16 in ihrer Längsrichtung im Rahmen 13 erreicht wird. Die Beladeklappe 27 wird in geschlossenem Zustand mit dem Kopfteil 18 mittels eines Rastverschlusses 36 verriegelt.

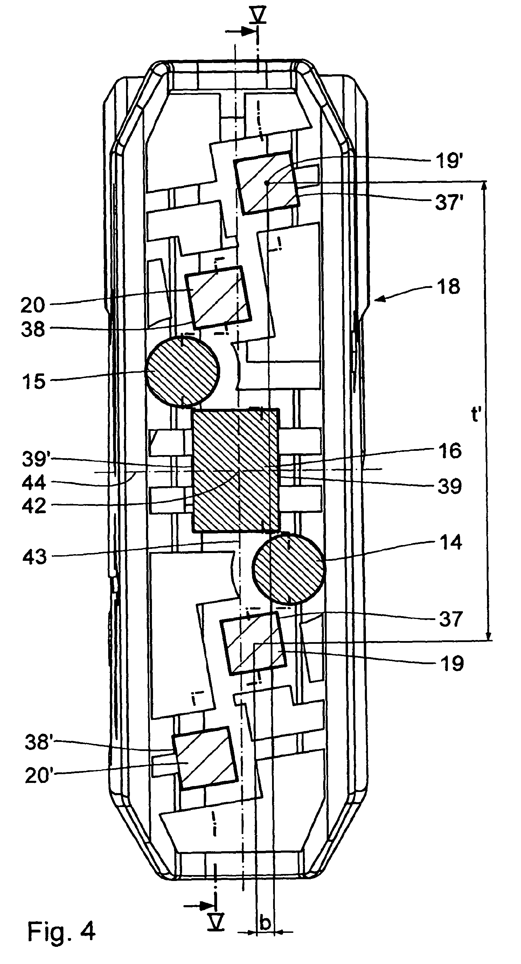

Wie insbesondere Fig. 4 entnehmbar ist, ist jeweils ein Paar von Führungsstangen 19, 19' der Rundfeile 14 und das andere Paar von Führungsstangen 20, 20' der anderen Rundfeile 15 zugeordnet, wobei die Führungsstange 19 sehr nah bei der Rundfeile 14 angeordnet ist, während die Führungsstange 19' entfernt hierzu vorgesehen ist. Entsprechendes gilt für die Führungsstangen 20, 20' in Bezug auf die Rundfeile 15. Der Grund liegt darin, dass die der jeweiligen Rundfeile 14 bzw. 15 benachbarte Führungsstange 19 bzw. 20 auf die Freifläche 9 bzw. 9' des Schneidezahns 2 bzw. 2' aufgelegt wird, der mit der benachbarten Rundfeile 14 bzw. 15 geschärft werden soll. Die jeweils andere Führungsstange 19' bzw. 20' wird auf die entsprechende Freifläche 9' oder 9 des jeweils benachbarten Schneidzahns 2' bzw. 2 aufgelegt.

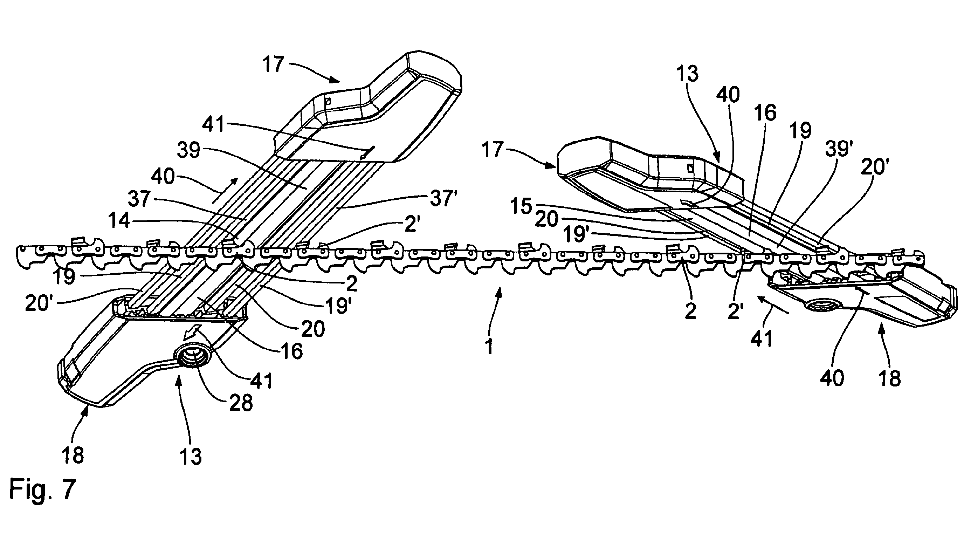

Da - wie Fig. 7 entnehmbar ist - das Schärfgerät unter dem Schärfwinkel α bzw. α' gegenüber der durch die Schneidrichtung 7 definierten Längsrichtung der Sägekette 1 angestellt wird, ist der Mittenabstand t' der Führungsstangen 19 und 19' bzw. 20 und 20' jeweils voneinander kleiner als die Teilung t der Sägekette 1.

Die jeweils auf einer Freifläche 9 bzw. 9' des entsprechenden Schneidzahns 2 bzw. 2' aufliegende Auflagefläche 37 bzw. 37' der Führungsstangen 19, 19' ist entsprechend der Neigung der Freiflächen 9, 9' geneigt. Entsprechendes gilt für die Auflageflächen 38, 38' der Führungsstangen 20, 20'. Da die Freiflächen 9, 9' quer zu der durch die Schneidrichtung 7 vorgegebenen Längsrichtung der Sägekette 1 eine Neigung aufweisen, ergibt sich auch ein Höhenversatz b der Auflageflächen 37, 37' und der Auflageflächen 38, 38' jeweils zueinander, wie aus Fig. 4 ersichtlich ist.

Wie sich aus Fig. 7 links ergibt, erfolgt das Schärfen der Schneidzähne 2 in der Weise, dass die Rundfeile 14 sich im Schneidzahn 2 befindet. Die Führungsstange 19 befindet sich hierbei auf der Freifläche 9 des Schneidzahns 2. Die Führungsstange 19' liegt auf der Freifläche 9' des benachbarten Schneidzahnes 2' auf. Die Flachfeile 16 liegt mit ihrer ebenen Feilenfläche 39 auf dem Tiefenbegrenzer 12 des Schneidzahns 2 auf. Da Feilen stets drückend und nicht ziehend erfolgt, erfolgt das Schärfen des Schneidzahnes 2 in Richtung 40 entsprechend den Pfeilen auf den Kopfteilen 17 und 18. Hierbei erfolgt also das Schärfen der Schneidzähne 2 in der Weise, dass die Bedienungsperson gegen das Kopfteil 18 drückt. Wenn dagegen die Schneidzähne 2' geschärft werden sollen, dann wird die Feile entsprechend der Darstellung in Fig. 7 rechts angesetzt. Hierbei erfolgt das Schieben bzw. Drücken des Schärfgeräts in Richtung 41 entsprechend den Pfeilen auf der jeweils anderen Seite der Kopfteile 17, 18. In diesem Fall drückt die Bedienungsperson gegen das Kopfteil 17, also in Richtung zum Kopfteil 18 hin. Hierbei liegt die ebene Feilenfläche 39' gegen den Tiefenbegrenzer 12' des jeweiligen Schneidzahns 2' an. Um den Wechsel vom Schärfen der Schneidzähne 2 zu den Schneidzähnen 2' zu ermöglichen, bedarf es lediglich einer Drehung des Schärfgeräts um seine Längsachse 42, d. h. die Richtungspfeile 41, die beim Schärfen der Schneidzähne 2 entsprechend der Darstellung in Fig. 7 links, unten liegen, kommen durch die Längsdrehung des Schärfgeräts um seine Längsachse 42 nach oben, was anschaulich aus Fig. 7 hervorgeht. Umgekehrt gilt entsprechendes.

Wie insbesondere aus Fig. 4 hervorgeht, bildet die Längsachse 42 auch die Mittelachse der Flachfeile 16. Wie weiterhin insbesondere aus Fig. 4 hervorgeht, weist das Schärfgerät 1 eine durch die Mittelachse 42 gelegte und diese aufnehmende Mittelebene 43 auf. Senkrecht zu dieser Mittelebene 43 ist hierzu eine Querebene 44 vorgesehen, wobei die Schnittlinie der Mittelebene 43 und der Querebene 44 die Längsachse 42 bilden. Das Paar von Führungsstangen 19, 19', die zugehörige Rundfeile 14 und die zugehörige Feilenfläche 39 sind gleichsam durch Drehung um 180° um die Längsachse 42 in die Position der Führungsstangen 20, 20' mit zugehöriger Rundfeile 15 und zugehöriger Feilenfläche 39' gebracht. Die Anordnung dieser Funktionseinheiten ist also drehsymmetrisch zur Längsachse 42. Die Führungsstangen 19, 19' einerseits und die Führungsstangen 20, 20' andererseits und die Rundfeilen 14, 15 und die Feilenflächen 39, 39' sind gegenüber der Mittelebene 43 jeweils in Richtung der Querebene 44 derart versetzt, dass beim Feilen eines Schneidzahns 2 nicht die zum Schärfen des Schneidzahns 2' vorgesehenen Teile mit der Sägekette 1 kollidieren.

Die einander gegenüberliegenden Seitenflächen 45, 46 der Kopfteile 17, 18, also die Seitenflächen 45, 46, die den Feilen 14, 15, 16 und den Führungsstangen 19, 19', 20, 20' zugewandt sind, verlaufen parallel zueinander und unter einem Winkel γ zur Längsachse 42 des Schärfgeräts, der etwa dem Schärfwinkel α bzw. α' entspricht. Zum Schärfen der Schneidzähne 2, 2' wird das Schärfgerät so zur Längsrichtung 7 der Sägekette 1 angestellt, dass die Sägekette 1 und die Seitenflächen 45, 46 etwa parallel zueinander verlaufen.

Da das Schärfgerät entsprechend der vorstehenden Schilderung in unterschiedlichen, den Richtungspfeilen 40, 41 entsprechenden Arbeitsrichtungen eingesetzt wird, weisen die Feilenflächen 39, 39' anders als normale Flachfeilen auf den beiden Feilenflächen 39, 39' in unterschiedlicher Richtung angeordnete Feilenhiebe 47, 47' bzw. Feilenzähne auf.

## Patentansprüche

1. Schärfgerät zum manuellen Schärfen der Schneidzähne (2, 2') von Sägeketten (1) für Kettensägen,
- mit einem Rahmen (13), der
-- zwei im Abstand voneinander angeordnete Kopfteile (17, 18) und
-- zwei Paare von jeweils zwei parallel zueinander und zu einer Längsachse (42) angeordneten, die Kopfteile (17, 18) fest miteinander verbindenden Führungsstangen (19, 19', 20, 20') aufweist,
- mit je einer jedem Paar von den Führungsstangen (19, 19', 20, 20') zugeordneten, parallel zu der Längsachse (42) angeordneten Rundfeilen (14, 15),
-- die in den Kopfteilen (17, 18) in der Längsrichtung (42) und quer dazu spielfrei, aber auswechselbar in Aufnahmen (21, 22, 29, 30) gehalten sind,
- mit zwei an einer Flachfeile (16) ausgebildeten, zueinander parallelen Feilenflächen (39, 39'), die in der Längsrichtung (42) und quer dazu spielfrei, aber auswechselbar in Aufnahmen (23, 31) gehalten sind,
- wobei die Paare von Führungsstangen (19, 19', 20, 20') und die jeweils zugehörigen Rundfeilen (14, 15) und die jeweiligen Feilenflächen (39, 39') drehsymmetrisch zur Längsachse (42) angeordnet sind.

2. Schärfgerät nach Anspruch 1, **dadurch gekennzeichnet,**
**dass** ein Kopfteil (18) eine Beladeklappe (27) aufweist, die in geöffnetem Zustand die in dem Kopfteil (18) ausgebildeten Aufnahmen freigibt und in geschlossenem Zustand verschließt.

3. Schärfgerät nach Anspruch 1 oder 2, **dadurch gekennzeichnet, dass** den Aufnahmen (21, 22, 23, 29, 30, 31) Widerlager (24, 25, 26, 32, 33, 34) zur Festlegung der Rundfeilen (14, 15) und der mindestens einen Flachfeile (16) in Richtung der Längsachse (42) zugeordnet sind.

4. Schärfgerät nach Anspruch 2 und 3, **dadurch gekennzeichnet, dass** die an dem die Beladeklappe (27) aufweisenden Kopfteil (18) ausgebildeten Widerlager (32, 33, 34) an der Beladeklappe (27) ausgebildet sind.

5. Schärfgerät nach Anspruch 1, **dadurch gekennzeichnet,**
**dass** die einander gegenüberliegenden Feilenflächen (39, 39') der Flachfeile (16) entgegengesetzt gerichtete Feilenhiebe (47, 47') aufweisen.

## Claims

1. Sharpening device for manually sharpening the cutting teeth (2, 2') of saw chains (1) for chain saws,
- with a frame (13), which
-- has two head parts (17, 18) arranged at a spacing from one another and
-- two pairs of, in each case, two guide rods (19, 19', 20, 20'), which are arranged parallel to one another and to a longitudinal axis (42) and rigidly connect the head parts (17, 18) to one another,
- with a respective round file (14, 15) associated with each pair of guide rods (19, 19', 20, 20') and arranged parallel to the longitudinal axis (42),
-- which are held in the head parts (17, 18) without play in the longitudinal direction (42) and transverse thereto, but exchangeably in receivers (21, 22, 29, 30),
- with two mutually parallel file faces (39, 39'), configured on one flat file (16), which are held without play in the longitudinal direction (42) and transverse thereto, but exchangeably in receivers (23, 31),
- wherein the pairs of guide rods (19, 19', 20, 20') and the respectively associated round files (14, 15) and the respective file faces (39, 39') are rotationally symmetrically arranged with respect to the longitudinal axis (42).

2. Sharpening device according to claim 1, **characterised in that** a head part (18) has a loading flap (27), which, in the opened state, releases the receivers configured in the head part (18) and closes them in the closed state.

3. Sharpening device according to claim 1 or 2, **characterised in that** abutments (24, 25, 26, 32, 33, 34) for fixing the round files (14, 15) and the at least one flat file (16) in the direction of the longitudinal axis (42) are associated with the receivers (21, 22, 23, 29, 30, 31).

4. Sharpening device according to claim 2 and 3, **characterised in that** the abutments (32, 33, 34) configured on the head part (18) having the loading flap (27) are configured on the loading flap (27).

5. Sharpening device according to claim 1, **characterised in that** the mutually opposing file faces (39, 39') of the flat file (16) have file cuts (47, 47') directed in opposite directions.

## Revendications

1. Appareil d'aiguisement pour l'aiguisement manuel des dents de coupe (2, 2') de chaînes de scie (1) pour scies à chaîne,
- comprenant un cadre (13) qui
-- présente deux parties frontales (17, 18) disposées espacées l'une de l'autre et
-- deux paires de tiges de guidage (19, 19', 20, 20') reliant solidement les parties frontales (17, 18) entre elles, parallèles l'une à l'autre et disposées sur un axe longitudinal (42),
- comprenant avec chaque paire de tiges de guidages (19, 19', 20, 20') des limes rondes (14, 15) disposées parallèlement à l'axe longitudinal (42),
-- qui sont maintenues dans les parties frontales (17, 18) en direction longitudinale (42), et sans jeu, perpendiculairement par rapport à celle-ci, mais pouvant être échangées dans des porte-pièces (21, 22),
- comprenant deux surfaces d'aiguisement (39, 39') formées sur une lime plate (16), parallèle l'une à l'autre qui sont maintenues en direction longitudinale (42) et sans jeu perpendiculairement par rapport à celle-ci, mais pouvant être échangées dans des porte-pièces (23, 31),
- les paires de tiges de guidage (19, 19', 20, 20') et les limes rondes (14, 15) correspondantes respectives et les surfaces d'aiguisement (39, 39') respectives étant disposées en une symétrie de révolution par rapport à l'axe longitudinal (42).

2. Appareil d'aiguisement selon la revendication 1 **caractérisé en ce**
**que** la partie frontale (18) présente un clapet de chargement (27) qui, dans la position ouverte, libère les porte-pièces formés dans la partie frontale (18), et les ferme dans la position fermée.

3. Appareil d'aiguisement selon les revendications 1 ou 2 **caractérisé en ce**
**que** des butées (24, 25, 26, 32, 33, 34) pour le maintien en place des limes rondes (14,15) et d'au moins une lime plate (16) sont disposés attenantes aux porte-pièces (21, 22, 23, 29, 30, 31) dans la direction de l'axe longitudinal (42).

4. Appareil d'aiguisement selon les revendications 2 et 3 **caractérisé en ce**
**que** les butées (32, 33, 34) formées sur la partie frontale (18) présentes sur le clapet de chargement (17) sont formées sur le clapet de chargement (27).

5. Appareil d'aiguisement selon la revendication 1 **caractérisé en ce**
**que** les surfaces d'aiguisement (39, 39') de la lime plate (16) se faisant face présentent des tailles de lime (47, 47') orientées de façon opposée.
